# EUROPÄISCHE PATENTSCHRIFT

(11) **EP 4 279 675 B1**
(45) Veröffentlichungstag und Bekanntmachung des Hinweises auf die Patenterteilung: **11.02.2026**
(21) Anmeldenummer: 22173788.5
(22) Anmeldetag: 17.05.2022
(51) Int. Cl.: E03D 5/02

(54) **BETÄTIGUNGSEINHEIT**
ACTUATING UNIT
UNITÉ D'ACTIONNEMENT

(43) Veröffentlichungstag der Anmeldung: 22.11.2023
(73) Patentinhaber: Geberit International AG, 8645 Jona (CH)
(72) Erfinder: SCHWENDENER, Peter, 8833 Samstagern (CH)
(74) Vertreter: Frischknecht, Harry Ralph

(56) Entgegenhaltungen:
- EP-A1- 0 555 922
- EP-A1- 2 388 379
- EP-A1- 2 476 808
- EP-A1- 3 705 649
- EP-B1- 2 045 404

## Beschreibung

### TECHNISCHES GEBIET

Die vorliegende Erfindung betrifft eine Betätigungseinheit für die Betätigung eines Spülventils in einem Spülkasten nach dem Oberbegriff von Anspruch 1.

### STAND DER TECHNIK

Aus dem Stand der Technik sind eine Vielzahl von Betätigungseinheiten oder Betätigungsplatten für die Spülauslösung bekannt geworden. Solche Betätigungseinheiten umfassen typischerweise zwei Betätigungstasten. Eine der Betätigungstasten dient der Auslösung einer Vollmengenspülung und die andere der Betätigungstasten dient der Auslösung einer Teilmengenspülung. Die Betätigungstasten wirken typischerweise auf Drückerstangen, welche dann ein Spülventil in einem Spülkasten mechanisch betätigen, so dass die Spülung ausgelöst werden kann.

Aus der EP 2 913 450 ist eine Betätigungseinheit bekannt geworden. Dabei sind zwei Betätigungstasten mit einem Tastenrahmen verbunden. Die Betätigungstasten und der Tastenrahmen werden dann durch eine Blende überdeckt. Teilbereiche der Betätigungstasten sind durch ein Fenster in der Blende zugänglich und können durch das Fenster hindurch betätigt werden.

Die EP 2 913 450 weist den Nachteil auf, dass der Tastenrahmen sich bei der Montage verziehen kann. Aufgrund der direkten Lagerung der beiden Betätigungstasten am Tastenrahmen kann ein derartiger Verzug negative Auswirkungen haben. Beispielsweise auf die Ausrichtung der beiden Tasten untereinander bzw. zur Blende oder auf eine grössere aufzubringende Betätigungskraft.

Aus den Druckschriften EP 2 388 379, EP 0 555 922, EP2 476 808 und EP 3 705 649 wurden weitere Betätigungseinheiten bekannt.

### DARSTELLUNG DER ERFINDUNG

Ausgehend von diesem Stand der Technik liegt der vorliegenden Erfindung eine Aufgabe zugrunde, eine Betätigungseinheit anzugeben, welche die Nachteile des Standes der Technik überwindet. Insbesondere soll eine Betätigungseinheit angegeben werden, welche für viele verschiedene Montagesituationen unter der Massgabe einer zuverlässigen Funktionsweise montiert werden kann.

Diese Aufgabe löst der Gegenstand von Anspruch 1. Demgemäss umfasst eine Betätigungseinheit für die Betätigung eines Spülventils in einem Spülkasten ein Supportelement mit mindestens einem Befestigungselement zur Befestigung des Supportelements zum Spülkasten oder zu einer anderen Montagestruktur und mit einer Lageraufnahme, eine in die Lageraufnahme einsetzbare Funktionseinheit mit einem Lagerelement und mit mindestens einem am Lagerelement gelagerten Betätigungshebel zur Betätigung von einer auf das Spülventil wirkenden Drückerstange und mindestens eine Betätigungsplatte. Die mindestens eine Betätigungsplatte ist über mindestens eine Schwenklagerstelle an der Funktionseinheit um eine Schwenkachse verschwenkbar gelagert. Die mindestens eine Betätigungsplatte ist dabei von einer Ausgangslage in eine Spüllage und von der Spüllage zurück in die Ausgangslage verschwenkbar. Die mindestens eine Betätigungsplatte wirkt mit ihrer Rückseite auf den mindestens einen Betätigungshebel und verschwenkt diesen bei der Bewegung von der Ausgangslage in die Spüllage in Richtung Supportelement, derart, dass die besagte Drückerstange betätigbar ist.

Gemäss der beschriebenen Merkmalskombination werden die Funktionen "Verbindung der Betätigungseinheit mit einem Spülkasten bzw. einer Vorwand" und "Bewegung der für eine Spülauslösung vorgesehenen Elemente, wie Betätigungsplatte und Betätigungshebel," mechanisch voneinander entkoppelt. Für die Lagerung der Betätigungseinheit ist das Supportelement vorgesehen und für die Bewegung der für eine Spülauslösung vorgesehenen Elemente ist die Funktionseinheit vorgesehen. Diese Entkoppelung weist den Vorteil auf, dass das Supportelement für die Befestigung an einem Spülkasten oder einer Vorwand sowie für die Lagerung der Betätigungseinheit als Ganzes ausgebildet werden kann und dass die Betätigungseinheit für die Bewegung der Elemente, die für eine Spülauslösung vorgesehen sind, bzw. die Auslösung der Spülfunktion vorgesehen sind, ausgebildet werden kann.

Mit anderen Worten gesagt: Die Anordnung der Funktionseinheit, an welcher der mindestens eine Betätigungshebel und die mindestens eine Betätigungsplatte gelagert ist, und die Platzierung der Funktionseinheit in der Lageraufnahme weist den Vorteil auf, dass die Funktionseinheit optimal für die Ausführung der Funktionen ausgebildet werden kann.

Darüber hinaus bietet die Funktionseinheit den Vorteil einer Betätigungsplattenlagerung, welche von der Befestigung des Supportelements unabhängig ist.

Das Supportelement ist vorzugsweise leicht elastisch ausgebildet, so dass dieses Fehlertoleranzen, die bei der Montage auftreten, ausgleichen kann. Demgegenüber ist die Funktionseinheit möglichst steif ausgebildet, so dass ein guter Support für die sich beweglichen Teile bereitgestellt werden kann und somit die Spülauslösung zuverlässig erfolgen kann.

Die Funktionseinheit ist separat vom Supportelement ausgebildet und lässt sich mit dem Supportelement mechanisch verbinden.

Vorzugsweise weist das Lagerelement der Funktionseinheit eine grössere Steifigkeit, insbesondere eine grössere Biegesteifigkeit und/oder eine grössere Verwindungssteifigkeit, als das Supportelement auf.

Das heisst, dass das Supportelement einfacher verformbar und somit einfacher an die eigentliche Montagesituation anpassbar ausgebildet ist. Die Funktionseinheit ist dabei weniger gut verformbar, was der Bewegung sowie der Lagerung der Betätigungshebel und der Betätigungsplatten zuträglich ist.

Vorzugsweise weisen das Supportelement und das Lagerelement jeweils eine Bodenwand auf. Von der Bodenwand erstrecken sich Verstärkungsrippen weg. Die Verstärkungsrippen sind derart ausgebildet, dass das Lagerelement der Funktionseinheit eine grössere Steifigkeit, insbesondere eine grössere Biegesteifigkeit und/oder eine grössere Verwindungssteifigkeit, als das Supportelement aufweist.

Mit den Verstärkungsrippen wird im Wesentlichen die Steifigkeit der Bodenwand erhöht.

Vorzugsweise liegt das Lagerelement im mit der Lageraufnahme verbundenen Zustand im Wesentlichen vollständig in der Lageraufnahme und ragt nicht aus der Lageraufnahme hinaus. Hierdurch kann eine besonders kompakte Struktur geschaffen werden.

Vorzugsweise ist die Lageraufnahme im Supportelement durch eine Bodenwand und von der Bodenwand abstehende Seitenwände begrenzt. Vorzugsweise ist die Lageraufnahme im Wesentlichen quaderförmig ausgebildet, wobei die Tiefe der Lageraufnahme um ein Vielfaches kleiner ist als die Breite und Länge der Lageraufnahme.

Vorzugsweise hat die Bodenwand Durchbrüche, durch welche die Drückerstangen hindurchragen. Die Drückerstangen erstrecken sich von hinten her durch die Lageraufnahme hindurch und ragen nach vorne hin aus der Lageraufnahme hinaus.

Vorzugsweise sind die Funktionseinheit und das Supportelement über Rastelemente mechanisch miteinander verrastet. Die Rastelemente werden durch Lagerzapfen und Lageröffnungen bereitgestellt.

In einer Variante weist das Supportelement mindestens zwei gegenüber einander liegende Lageröffnungen auf und die Funktionseinheit weist einen festen Lagerzapfen und einen gefedert ausgebildeten Lagerzapfen auf, wobei zur festen Lagerung der Funktionseinheit in der Lageraufnahme, die Lagerzapfen in die Lageröffnungen eingreifen.

In einer anderen Variante weist die Funktionseinheit mindestens zwei gegenüber einander liegende Lageröffnungen auf und das Supportelement weist einen festen Lagerzapfen und einen gefedert ausgebildeten Lagerzapfen auf, wobei zur festen Lagerung der Funktionseinheit in der Lageraufnahme, die Lagerzapfen in die Lageröffnungen eingreifen.

Die Lageröffnungen bzw. die Lagerzapfen liegen einander so gegenüber, dass zwischen die Lageröffnungen bzw. die Lagerzapfen am Supportelement, die Funktionseinheit zu liegen kommt.

Vorzugsweise sind insgesamt vier Rastelemente vorhanden.

Vorzugsweise liegen die gegenübereinander liegenden Lageröffnungen jeweils so zueinander, dass deren mittig durch die Lageröffnungen verlaufenden Mittelachsen parallel zueinander, insbesondere kollinear zueinander, verlaufen.

Vorzugsweise weist der gefedert ausgebildete Lagerzapfen eine Betätigungsfläche auf, an welcher der Installateur bei Wartungsarbeiten ein Werkzeug ansetzen kann.

Vorzugsweise weist das Lagerelement mindestens eine abstehende Rippe auf, welche im mit dem Supportelement verbundenen Zustand in eine korrespondierende Ausnehmung am Supportelement eingreift. Die Paarung Rippe/Ausnehmung kann zusätzlich oder alternativ zu den oben beschriebenen Rastelementen angeordnet sein.

Vorzugsweise liegt das mindestens eine Befestigungselement in seitlichen Randbereichen der Lageraufnahme und das Lagerelement der Funktionseinheit weist mindestens einen Freischnitt auf, derart, dass bei eingesetztem Lagerelement das mindestens eine Befestigungselement weiterhin zugänglich und betätigbar ist.

Hierdurch kann das Befestigungselement bei eingesetzter Funktionseinheit betätigt werden. Beispielsweise nachgezogen, gelöst oder anderweitig betätigt werden.

Vorzugsweise sind die Befestigungselemente als Schieberelemente ausgebildet. Die Schieberelemente sind in Schieberaufnahmen am Supportelement verschiebbar gelagert. Die Schieberelemente sind weiter für den Eingriff in eine korrespondierende Aufnahme an einem Spülkasten ausgebildet.

Weiter ist am Lagerelement der Funktionseinheit ein Riegelelement verschiebbar gelagert. Das Supportelement weist eine Riegelaufnahme auf. Das Riegelelement ist von einer Freigabelage, in welcher das Riegelelement nicht im Eingriff mit der Riegelaufnahme steht, in eine Verriegelungslage, in welcher das Riegelelement in festem Eingriff mit der Riegelaufnahme steht, verschiebbar. Der feste Eingriff zwischen Riegelelement und Riegelaufnahme ist derart, dass eine Trennbewegung zwischen Lagerelement und Supportelement verunmöglicht wird. In der Freigabelage kann das Lagerelement vom Supportelement getrennt werden.

Vorzugsweise weist das Riegelelement einen schlitzartigen Raum auf und die Riegelaufnahme wird durch einen Wandbereich bereitgestellt. In der Verriegelungslage ragt der Wandbereich in den schlitzartigen Raum ein.

Vorzugsweise ist das Riegelelement in Einbaulage der Betätigungseinheit gesehen, durch die mindestens eine Betätigungsplatte überdeckt und somit nicht einsehbar. Das heisst mit anderen Worten, dass ein Benutzer, welcher in Richtung der Flächennormalen auf die Frontseite der Betätigungsplatte schaut, das Riegelelement nicht erkennen kann.

Vorzugsweise ist das Riegelelement bezüglich der Lageraufnahme gesehen gegenüber den Schwenklagerstellen angeordnet. In Einbaulage liegt das Riegelelement demnach unterhalb der Schwenklagerstellen und ist somit von unten her zugänglich.

Vorzugsweise ist das Riegelelement mit einem Abstand zur Rückseite der Betätigungsplatte, insbesondere wenn diese in der Ausgangslage steht, angeordnet, wobei durch den Abstand ein Zwischenraum geschaffen wird, durch welchen das Riegelelement ergreifbar wird.

Vorzugsweise ist das Riegelelement an einem äusseren Rand des Lagerelements angeordnet.

Vorzugsweise verfügt das Riegelelement über eine Rastlasche verfügt, über welche das Riegelelement in der Verriegelungslage und/oder in der Freigabelage in eine Rastausnehmung am Supportelement eingreift. In anderen Varianten verfügt das Supportelement über eine Rastlasche, über welche das Riegelelement in der Verriegelungslage und/oder in der Freigabelage in eine Rastausnehmung am Riegelelement eingreift.

Vorzugsweise wird das Riegelelement von der Freigabelage in die Verriegelungslage entlang einer Längsbewegung bewegt. Das Riegelelement ist demnach mit einer Längsführung am Lagerelement gelagert.

Vorzugsweise stehen das Riegelelement und die Riegelaufnahme in der Verriegelungslage derart miteinander im Eingriff, dass eine Bewegung des Lagerelements gegen die Federwirkung des gefedert ausgebildeten Lagerzapfens verunmöglicht wird.

Vorzugsweise sind pro Betätigungsplatte zwei beabstandet zueinander angeordnete Schwenklagerstellen vorhanden. Vorzugsweise sind die Schwenklagerstellen für eine Betätigungsplatte möglichst in einem grossem Abstand zueinander angeordnet.

Vorzugsweise wird die Schwenklagerstelle durch eine Schwenklagerachse und eine Schwenklageraufnahme bereitgestellt, wobei die Schwenklagerachse in der Schwenklageraufnahme verschwenkbar gelagert ist.

Vorzugsweise weist die Schwenklageraufnahme einen Durchbruch auf, der derart ausgebildet ist, dass die Schwenklagerachse über diesen Durchbruch in die Schwenklageraufnahme einsetzbar ist.

Vorzugsweise ist die Schwenklagerachse am Lagerelement und die Schwenklageraufnahme an der Betätigungsplatte angeordnet. Alternativerweise ist die Schwenklagerachse an der Betätigungsplatte und die Schwenklageraufnahme am Lagerelement angeordnet ist.

Vorzugsweise ist die mindestens eine Schwenklagerstelle bei einem oberen Rand des Lagerelements angeordnet.

Vorzugsweise erstreckt sich die Betätigungsplatte bezüglich der Schwenkachse in Einbaulage gesehen nach oben und nach unten hin. Die Erstreckung nach oben hin ist dabei wesentlich kleiner als die Erstreckung nach unten hin.

Vorzugsweise befindet sich die Schwenkachse im inneren der Lageraufnahme, wenn die Funktionseinheit in die Lageraufnahme eingesetzt ist.

Vorzugsweise weist die Frontseite der mindestens einen Betätigungsplatte eine Ausdehnung auf, welche derart ist, dass die Funktionseinheit und das Supportelement bei Blick in Richtung der Flächennormalen der Betätigungsplatte auf die Betätigungsplatte überdeckt sind.

Mit anderen Worten gesagt deckt die mindestens eine Betätigungsplatte die Funktionseinheit und das Supportelement nach vorne hin ab. Es ist demnach kein Blendenelement vorzusehen.

Vorzugsweise weist die mindestens eine Betätigungsplatte ein Trägerelement und ein Dekorelement auf, wobei das Dekorelement auf dem Trägerelement fest befestigt ist und wobei bei Blick in Richtung der Flächennormalen des Dekorelements das Dekorelement das Trägerelement vollständig überdeckt.

Vorzugsweise ist das Dekorelement am Trägerelement angeklebt. Vorzugsweise ist das Dekorelement aus Glas oder aus Metall oder aus Kunststoff oder aus einem Stoffgemisch, wie beispielsweise ein polymergebundener Mineralwerkstoff. Vorzugsweise ist das Trägerelement aus Kunststoff. Vorzugsweise umfasst das Trägerelement die für die Schwenklagerstelle vorgesehenen Elemente.

Vorzugsweise weist das Dekorelement eine Ausdehnung auf, welche derart ist, dass die Funktionseinheit und das Supportelement bei Blick in Richtung der Flächennormalen des Dekorelements auf die Betätigungsplatte überdeckt sind.

Vorzugsweise ist die Frontseite der Betätigungsplatte bzw. des ggf. vorhandenen Dekorelements mit einer Krümmung um eine Krümmungsachse gekrümmt ausgebildet, wobei die Krümmungsachse vorzugsweise parallel zur Schwenkachse verläuft. Alternativ kann die Frontseite der Betätigungsplatte bzw. des ggf. vorhandenen Dekorelements als ebene Fläche ausgebildet sein.

Vorzugsweise definiert das Supportelement mit einem Rand eine Ebene. Vorzugsweise verläuft die Schwenkachse parallel zur besagten Ebene. In der Ausgangslage liegt die Frontseite der Betätigungsplatte derart, dass ein in Richtung der Flächennormalen auf die Ebene gesehener Abstand zwischen der Frontseite und der Ebene mit zunehmender Distanz von der Schwenkachse grösser wird.

In Einbaulage ist die Ebene E im Wesentlichen parallel zu der Oberfläche einer Vorwand. Das heisst, dass die Frontseite winklig geneigt zur Oberfläche der Vorwand zu liegen kommt. Die Ebene ist vorzugsweise eine Vertikalebene.

Der Vorteil dieser Konfiguration ist, dass dem Benutzer durch die winklig geneigte Anordnung eine gute Signalisation der Betätigungsplatte bereitgestellt werden kann. Darüber hinaus kann für die Betätigung der Betätigungshebel auch der Betätigungsweg der Betätigungsplatte optimiert werden. Beispielsweise kann bei einem grösseren Abstand ein grösserer Weg bereitgestellt werden als bei einem kleineren Abstand.

Vorzugsweise ist der maximale Abstand zwischen der Frontseite und der Ebene im Bereich von 15 Millimetern bis 30 Millimetern.

Vorzugsweise liegt die Schwenkachse in einer Distanz vom oberen Rand der Betätigungsplatte, wobei die Distanz höchstens einem Fünftel, insbesondere höchstens einem Achtel oder einem Zehntel, der Distanz zwischen dem oberen Rand und dem unteren Rand der Betätigungsplatte entspricht. Das heisst mit anderen Worten, dass die Schwenkachse deutlich näher zum oberen Rand als zum unteren Rand liegt. Der obere Rand und der untere Rand liegen vorzugsweise parallel zueinander und parallel zur Schwenkachse.

In einer ersten Variante nimmt der Abstand mit zunehmender Distanz von der Schwenkachse gesehen kontinuierlich zu. In einer zweiten Variante nimmt der Abstand mit zunehmender Distanz on der Schwenkachse gesehen variabel zu. Mit anderen Worten gesagt wird der Abstand mit zunehmender Distanz konstant grösser oder der Abstand wird mit zunehmender Distanz variabel grösser.

Vorzugsweise wird der Abstand bei Betätigung der Betätigungsplatte kleiner.

Vorzugsweise ist der Winkel zwischen der Frontseite der Betätigungsplatte und der Ebene in der Ausgangslage zwischen 4° und 20°, insbesondere zwischen 5° und 12°.

Vorzugsweise verläuft, in Einbaulage gesehen, die Schwenkachse in der Horizontalen und der Abstand ist an dem der Schwenkachse gegenüberliegenden Ende der Betätigungsplatte maximal. Das heisst, der Abstand nimmt mit zunehmendem Abstand zur Schwenkachse zu.

Die Schwenkachse liegt in Einbaulage gesehen oberhalb des maximalen Abstandes. Mit anderen Worten gesagt erstreckt sich die Betätigungsplatte von der Schwenkachse her gesehen schräg nach unten hin.

Vorzugsweise liegt ein Kontaktpunkt zwischen dem Betätigungshebel und der Betätigungsplatte in der Ausgangslage bzw. zu Beginn der Betätigung vor der besagten Ebene und die Schwenkachse liegt hinter der besagten Ebene.

Vorzugsweise steht bei der Betätigung die Betätigungsplatte über mehrere Kontaktpunkte mit dem Betätigungshebel in Kontakt, wobei die Kontaktpunkte unterhalb einer Horizontalebene liegen, welche parallel zur Schwenkachse, rechtwinklig zur Ebene und mittig durch die Betätigungsplatte verläuft.

Vorzugsweise verfügt die Betätigungsplatte über einen betätigungsplattenseitigen Anschlag mit einer entsprechenden Anschlagsfläche und die Funktionseinheit verfügt über einen funktionseinheitsseitigen Anschlag mit einer entsprechenden Anschlagsfläche, wobei die beiden genannten Anschläge bzw. Anschlagsflächen aneinander anschlagen, wenn die Betätigungsplatte in der Ausgangslage ist.

Bei Betätigung der mindestens einen Betätigungsplatte werden die beiden genannten Anschlagsflächen voneinander weg bewegt Wenn die Betätigungsplatte in der Ausgangslage ist, liegen die beiden genannten Anschlagsflächen zwischen der Funktionseinheit und der mindestens einen Betätigungsplatte.

Durch die Lage der Anschlagsflächen in der Ausgangslage zwischen der Funktionseinheit und der mindestens einen Betätigungsplatte ergeht der Vorteil, dass die Dicke der Betätigungseinheit kompakt ausgebildet sein kann.

Besonders bevorzugt liegen die beiden Anschlagsflächen in der Ausgangslage zwischen dem Lagerelement der Funktionseinheit und der mindestens einen Betätigungsplatte.

Der Anschlag wirkt vorzugsweise als Anschlag gegen eine Bewegung aus der Ausgangslage entgegen der Bewegung in die Betätigungslage. Mit anderen Worten gesagt hält der Anschlag die Betätigungsplatte in deren Ausgangslage.

Bei einer Bewegung der Betätigungsplatte von der Ausgangslage in die Spüllage werden die beiden Anschläge wie erwähnt relativ voneinander weg bewegt. Bei einer Bewegung der Betätigungsplatte von der Spüllage in die Ausgangslage werden die beiden Anschläge relativ aufeinander zu bewegt.

Vorzugsweise weist die Betätigungseinheit weiterhin mindestens ein Federelement auf. Das mindestens eine Federelement ist zwischen der Rückseite der Betätigungsplatte und dem Lagerelement angeordnet und drückt die Betätigungsplatte vom Lagerelement derart weg, dass die beiden Anschlagsflächen miteinander in Kontakt bringbar sind.

Vorzugsweise ist der funktionseinheitsseitige Anschlag relativ zum Lagerelement einstellbar am Lagerelement gelagert. Durch diese Einstellbarkeit wird erreicht, dass die Lage der Betätigungsplatte in der Ausgangslage eingestellt werden kann. Vorzugsweise ist der betätigungsplattenseitige Anschlag als fester bzw. als nicht einstellbarer Anschlag ausgebildet.

Vorzugsweise ist der funktionseinheitsseitige Anschlag in einer Anschlagsführung im Lagerelement einstellbar gelagert und wobei weiterhin eine Anschlagseinstellschraube im Lagerelement gelagert ist, derart, dass der funktionseinheitsseitige Anschlag bei Betätigung der Anschlagseinstellschraube einstellbar ist.

Vorzugsweise ist der funktionseinheitsseitige Anschlag in der Anschlagsführung in einer Längsrichtung einstellbar gelagert. Vorzugsweise sind die Anschlagseinstellschraube und der funktionseinheitsseitige Anschlag so ausgebildet, dass nach erfolgter Anschlagseinstellung der funktionseinheitsseitige Anschlag fest in der Anschlagsführung liegt.

Vorzugsweise steht die Anschlagsführung von der Seite des Lagerelements, die der Betätigungsplatte zugewandt ist, ab und stellt eine Führung für den funktionseinheitsseitigen Anschlag zur Betätigungsplatte hin bereit.

Vorzugsweise ist die Anschlagseinstellschraube in einer Aufnahme im Lagerelement drehbar und axial fest gelagert.

Vorzugsweise weist der funktionseinheitsseitige Anschlag eine Gewindeöffnung auf, in welche das Gewinde der Anschlagseinstellschraube eingreift.

Vorzugsweise weist die Aufnahme zwei Federabschnitte auf, in welche die Anschlagseinstellschraube eingeklipst werden kann.

Vorzugsweise weist die Anschlagseinstellschraube einen Schraubenkopf auf, welcher mit einer Mehrzahl von Erhebungen ausgebildet ist, so dass der Schraubenkopf gut ergriffen werden kann.

Vorzugsweise weist die Anschlagseinstellschraube eine Antriebsstruktur auf, über welche die Anschlagseinstellschraube mit einem Werkzeug betätigbar ist. Vorzugsweise ist die Antriebsstruktur als Innensechskant und/oder als Schlitz ausgebildet. In einer besonders bevorzugten Ausführungsform liegt die Antriebsstruktur derart, dass die Antriebsstruktur von vorne her, also von Seiten der Betätigungsplatte zugänglich ist. In dieser Variante lässt sich die Betätigungsplatte von der Ausgangslage her in eine Montagelage bewegeben, so dass die in Ausgangslage hinter der Betätigungsplatte liegende Anschlagseinstellschraube zugänglich wird. Somit kann ein Installateur die Betätigungsplatte sehr einfach ausrichten. Vorzugsweise ist der betätigungsplattenseitige Anschlag Teil eines von der Rückseite der Betätigungsplatte abstehenden Hakens.

Vorzugsweise ist der Haken derart ausgebildet, dass dieser bei einer Montagebewegung relativ zum funktionseinheitsseitigen Anschlag ausgelenkt wird, wobei der Haken im ausgelenkten Zustand derart liegt, dass die beiden Anschlagsflächen seitlich zueinander liegen, derart, dass die beiden Anschlagsflächen relativ zueinander verschiebbar sind und wobei der Haken im nicht ausgelenkten Zustand derart liegt, dass die beiden Anschlagsflächen derart zueinander liegen, dass die beiden Anschlagsflächen miteinander in Kontakt bringbar sind.

Hierfür weisen der Haken und der funktionseinheitsseitige Anschlag vorzugsweise eine abgeschrägte Fläche auf, welche die Bewegung in den ausgelenkten Zustand begünstigen. Die Anschlagsflächen liegen jeweils hinter den abgeschrägten Flächen.

Vorzugsweise weist das Lagerelement eine Ausnehmung auf, wobei der Haken bei der Betätigungsbewegung der Betätigungsplatte von der Ausgangslage in die Spüllage in die Ausnehmung bewegt wird.

Die Ausnehmung liegt in Einbaulage gesehen unterhalb der Anschlagsführung.

Vorzugsweise sind zwei Betätigungsplatten nebeneinander angeordnet, wobei die Betätigungsplatten mit einem Spalt beabstandet zueinander stehen. In Einbaulage verläuft der Spalt vorzugsweise im Wesentlichen in der Vertikalen. Die beiden Betätigungsplatten sind dabei derart angeordnet, dass diese das Supportelement und die Funktionseinheit, wie oben beschrieben, überdecken.

Vorzugsweise weist jede der Betätigungsplatten einen Anschlag auf, derart, dass die Frontseiten der Betätigungsplatten relativ zueinander ausrichtbar sind.

Weitere Weiterbildungen sind dadurch gekennzeichnet,
dass das Supportelement Öffnungen zur Durchführung von mit dem Spülventil zusammenwirkenden Drückerstangen aufweist, und/oder
dass am Lagerelement mindestens ein Federelement angeordnet ist, welches die Betätigungsplatte in Richtung der Ausgangslage mit einer Federkraft beaufschlagt; und/oder
dass das Lagerelement der Funktionseinheit Durchbrüche für die Hindurchführung der Betätigungshebel aufweist.

Eine Sanitäranordnung umfassend eine Betätigungseinheit nach obiger Beschreibung, einen Spülkasten mit einem Spülventil und eine Vorwand, wobei die Betätigungseinheit mit der besagten Ebene parallel zur Sichtseite der Vorwand angeordnet ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer teilweise explodiert dargestellten Betätigungseinheit gemäss einer bevorzugten Ausführungsform von oben;
- Fig. 2: die Ansicht von Figur 1 von unten;
- Fig. 3: eine perspektivische Explosionsansicht der Betätigungseinheit;
- Fig. 4: eine Detailansicht der Figur 3;
- Fig. 5: eine Detailansicht der Figur 4;
- Fig. 6: eine Schnittdarstellung durch eine Lagerstelle der Betätigungseinheit gemäss den vorhergehenden Figuren;
- Fig. 7: eine perspektivische Ansicht der Betätigungseinheit nach einer der vorhergehenden Figuren mit einem Verriegelungselement;
- Fig. 8: eine Rückansicht der Figur 7;
- Fig. 9a/9b: perspektivische Detailansichten des Verriegelungselements der Betätigungseinheit gemäss den vorhergehenden Figuren 7 und 8;
- Fig. 10: eine Schnittdarstellung durch eine Schwenklagerstelle der Betätigungseinheit gemäss den vorhergehenden Figuren in der Ausgangslage;
- Fig. 11: die Darstellung nach Figur 10 in der Spüllage; und
- Fig. 12: eine Rückansicht und eine Detailansicht der Betätigungseinheit nach einer der vorhergehenden Figuren mit einem Anschlag.

### BESCHREIBUNG BEVORZUGTER AUSFÜHRUNGSFORMEN

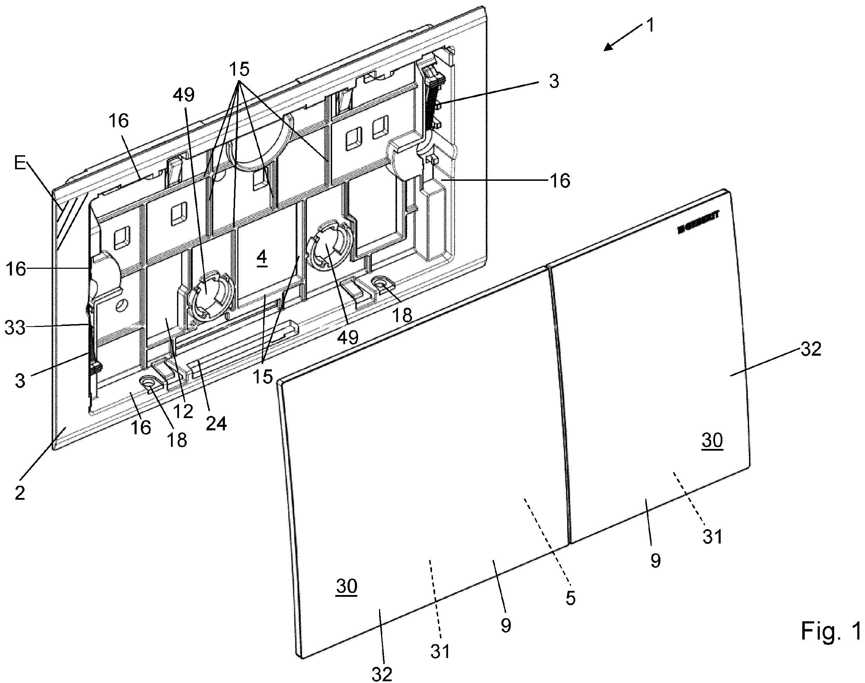

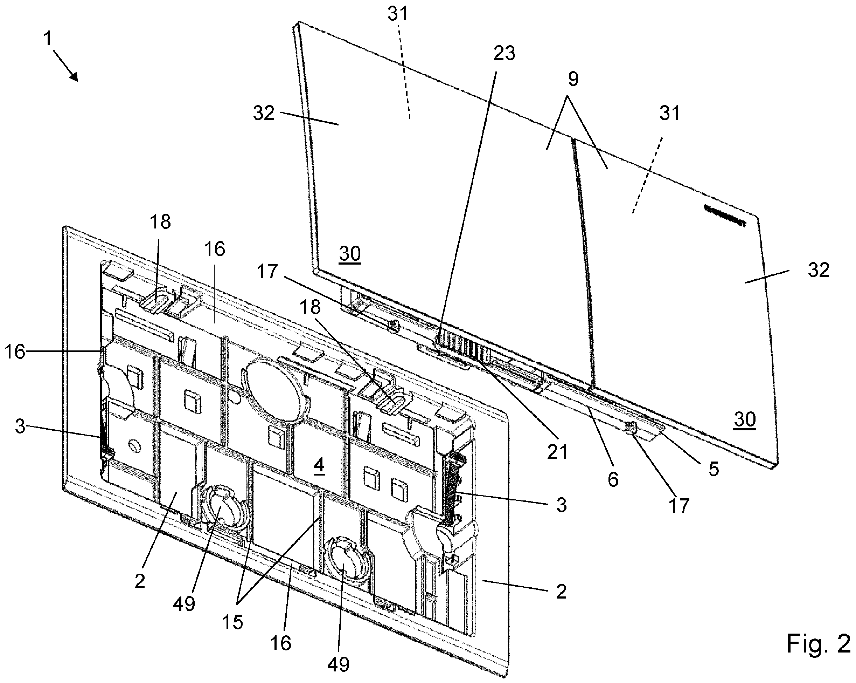

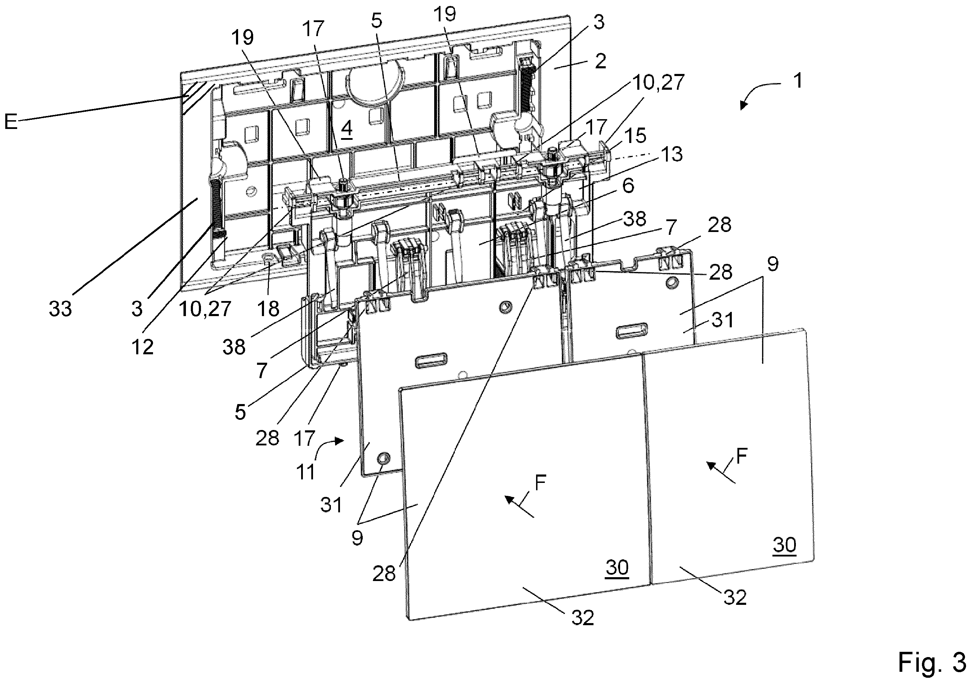

Unter Bezugnahme auf die Figuren 1 bis 12 wird nun eine bevorzugte Ausführungsform der vorliegenden Erfindung erläutertet. Die Figuren 1 bis 12 zeigen unterschiedliche Ansichten einer Betätigungseinheit gemäss einer besonders bevorzugten Ausführungsform der vorliegenden Erfindung.

Die Betätigungseinheit 1 für die Betätigung eines Spülventils in einem Spülkasten umfasst ein Supportelement 2, eine Funktionseinheit 3 und mindestens eine Betätigungsplatte 9. In den Figuren wird eine Ausführungsform mit zwei Betätigungsplatten 9 gezeigt.

Das Supportelement 2, welches in den Figuren 1 bis 4 besonders gut ersichtlich ist, umfasst mindestens ein Befestigungselement 3. In der gezeigten Ausführungsform sind zwei Befestigungselemente 3 vorhanden. Mit dem mindestens einen Befestigungselement 3 kann das Supportelement 2 zu einem Spülkasten oder einer Vorwand oder einer anderen Struktur befestigt werden. Weiter weist das Supportelement 2 eine Lageraufnahme 4 auf Das Supportelement 2 weist eine Bodenwand 12 auf. Von der Bodenwand 12 erstrecken sich Verstärkungsrippen 15 und umfangsseitig Seitenwände 16. Die Lageraufnahme 4 im Supportelement 2 wird durch die genannte Bodenwand 12 und durch von der Bodenwand 12 abstehende Seitenwände 16 begrenzt. In der gezeigten Ausführungsform ist die Lageraufnahme 6 im Wesentlichen quaderförmig ausgebildet ist. Die Tiefe der Lageraufnahme 6 ist dabei um ein Vielfaches kleiner ist als die Breite und Länge der Lageraufnahme 6. In der gezeigten Ausführungsform erstreckt sich weiter ein Flansch 48 von den Seitenwänden 16 weg. Die Flansche 48 weisen den Vorteil auf, dass Spaltstellen, wie sie sich zwischen dem Supportelement 2 und einer Vorwand ergeben können, abgedeckt werden können. Das Supportelement 2 weist weiterhin zwei Öffnungen 49 auf, durch welche Drückerstangen 8 zur Betätigung eines Spülventils hindurchführbar sind.

In den Figuren 1 bis 5 ist weiterhin die Funktionseinheit 5 genauer ersichtlich. Die Funktionseinheit 5 ist in die Lageraufnahme 4 einsetzbar. Die Funktionseinheit 5 umfasst ein Lagerelement 6 und mindestens einen am Lagerelement 6 gelagerten Betätigungshebel 7. Hier sind zwei Betätigungshebel 7 angeordnet. Der Betätigungshebel 7 wird durch die Betätigungsplatte 9 bewegt. Das heisst, dass die mindestens eine Betätigungsplatte 9 mit ihrer Rückseite 11 auf den mindestens einen Betätigungshebel 7 wirkt und diesen bei der Bewegung von der Ausgangslage in die Spüllage in Richtung Supportelement 2 verschwenkt, derart, dass die Drückerstange 8 betätigbar ist. Der Betätigungshebel 7 wirkt auf die Drückerstange 8.

Die mindestens eine Betätigungsplatte 9 ist über mindestens eine Schwenklagerstelle 10 an der Funktionseinheit 5 um eine Schwenkachse S von einer Ausgangslage in eine Spüllage verschwenkbar gelagert. Pro Betätigungsplatte 9 sind hier jeweils zwei Schwenklagerstellen 10 angeordnet. Die Schwenklagerstellen 10 liegen dabei vorzugsweise in grösstmöglichen Abstand zueinander. Die bevorzugte Ausbildung der Schwenklagerstellen 10 wird weiter unten detailliert erläutert.

Vorzugsweise weist das Lagerelement 6 der Funktionseinheit 5 eine grössere Steifigkeit, insbesondere eine grössere Biegesteifigkeit und/oder eine grössere Verwindungssteifigkeit, als das Supportelement 2 auf. Hierdurch können Kräfte, welche bei der Betätigung der mindestens einen Betätigungsplatte wirken, gut durch die Funktionseinheit 5 aufgenommen werden und das Lagerelement 6 kann unter leichter Verformung mit einem Spülkasten oder einer Vorwand verbunden werden.

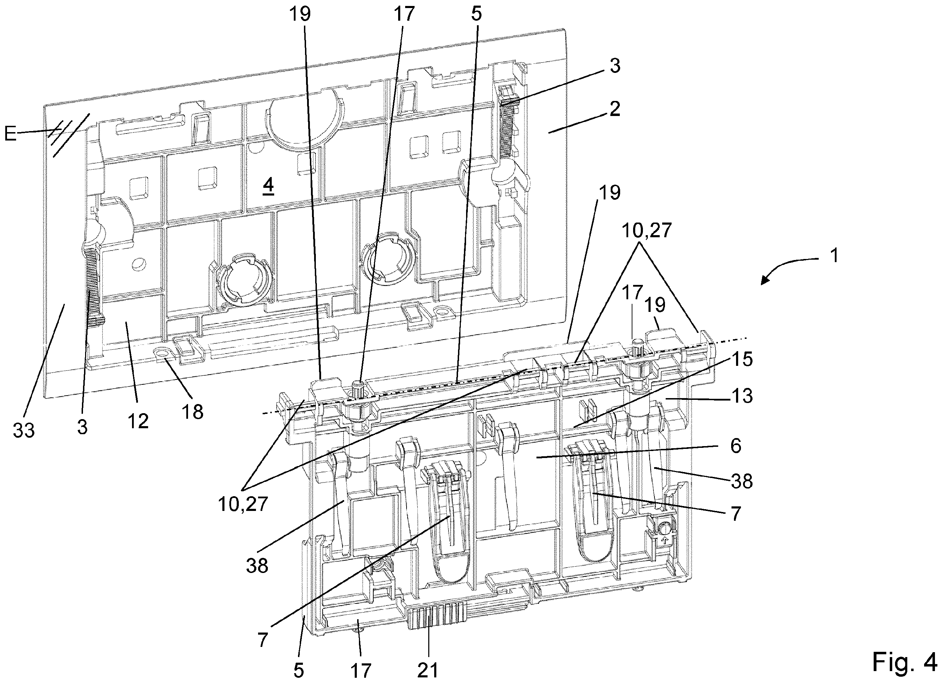

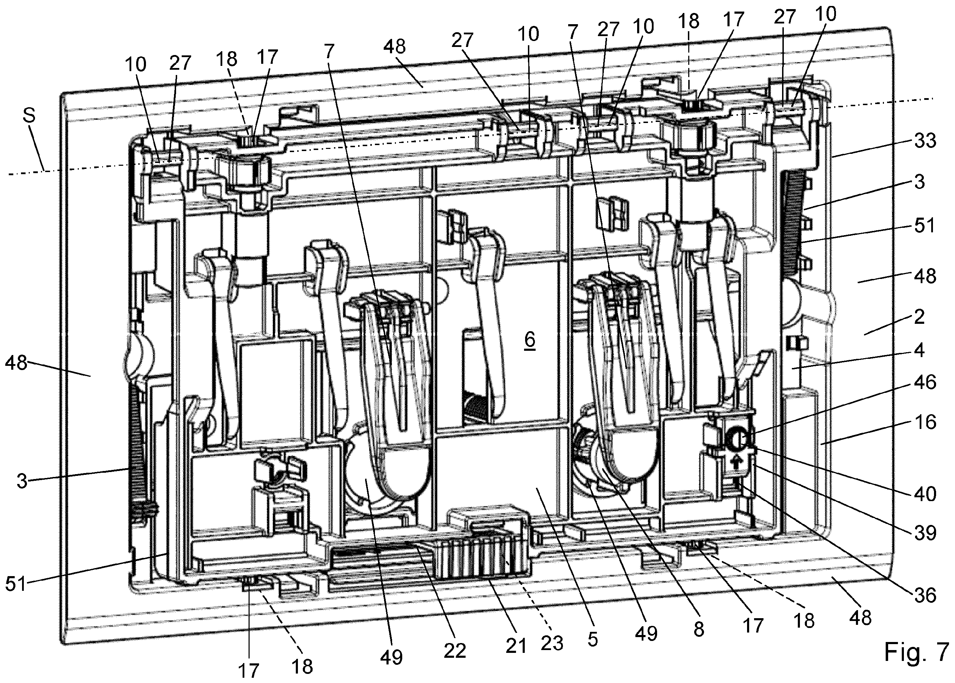

Das Lagerelement 6 und die Lageraufnahme 4 sind vorzugsweise derart ausgebildet, dass das Lagerelement 6 im montierten Zustand im Wesentlichen vollständig in der Lageraufnahme 4 liegt. Dies wird in der Figur 4 und 7 entsprechend gezeigt.

In den Figuren 4 bis 5 werden Rastelemente gezeigt, mit welche die Funktionseinheit 5 mit dem Supportelement 2 mechanisch verrastet bzw. verbunden sind. Die Rastelemente werden durch Lagerzapfen 17 und korrespondierende Lageröffnungen 18 bereitgestellt. Das Supportelement 2 weist mindestens zwei jeweils gegenüber einander liegende Lageröffnungen 18 auf. Hier sind insgesamt vier Lageröffnung 18 vorhanden. Die Funktionseinheit 5 weist mindestens einen festen Lagerzapfen 17 und einen gefedert ausgebildeten Lagerzapfen 17 auf. In der gezeigten Ausführungsform sind zwei Paare von Lagerzapfen mit jeweils einem festen und einem gefederten Lagerzapfen angeordnet. Zur festen Lagerung der Funktionseinheit 5 in der Lageraufnahme 4 greifen die Lagerzapfen 17 in die Lageröffnungen 18 ein. Die gefederten Lagerzapfen 17 sind mit der Federkraft einer Druckfeder 50 beaufschlagt. Der gefederte Lagerzapfen 17 weist hier eine Betätigungsfläche 47 auf, welche mit einem Werkzeug für Demontagezwecke betätigbar ist.

Zur weiteren mechanischen Befestigung des Lagerelements 6 in der Lageraufnahme, weist das Lagerelement 6 mindestens eine vom Lagerelement 6 abstehende Rippe 19 auf. Wenn das Supportelement 2 mit dem Lagerelement 6 im verbundenen Zustand ist, greift die Rippe 19 in eine korrespondierende Ausnehmung 20 am Supportelement 2 ein.

In der Figur 7 wird gezeigt, dass das mindestens eine Befestigungselement 3 in seitlichen Randbereichen der Lageraufnahme 4 liegt. Ferner weist das Lagerelement 6 der Funktionseinheit 5 mindestens einen Freischnitt 51 auf. Hier ist pro Befestigungselement 3 je ein Freischnitt 51 angeordnet. Der mindestens eine Freischnitt 51 ist derart angeordnet, dass bei eingesetztem Lagerelement 6 das mindestens eine Befestigungselement 3 weiterhin zugänglich und betätigbar ist.

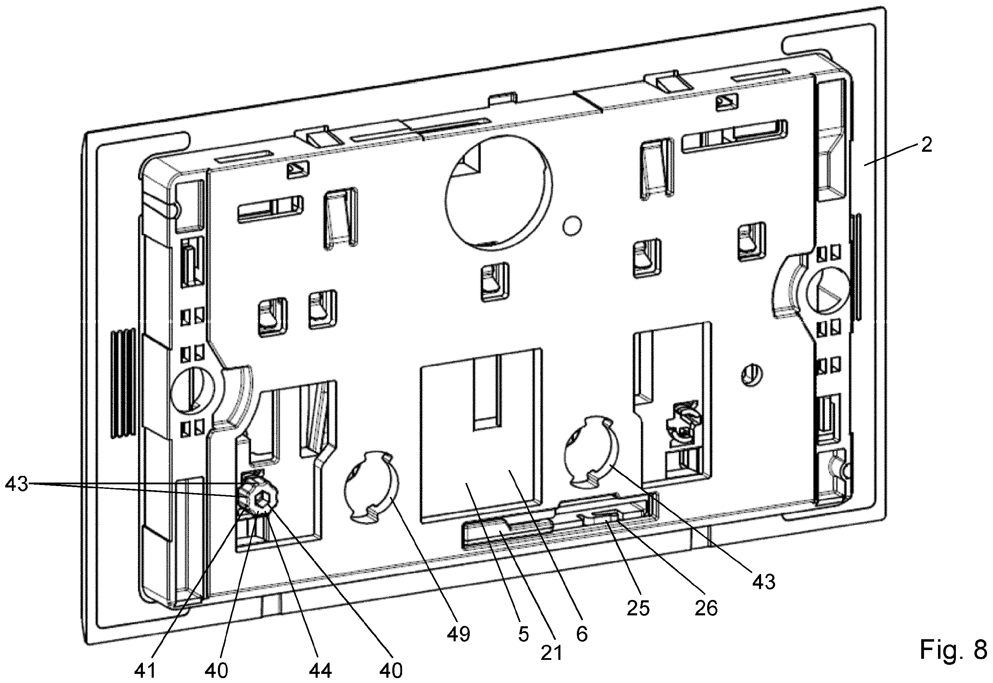

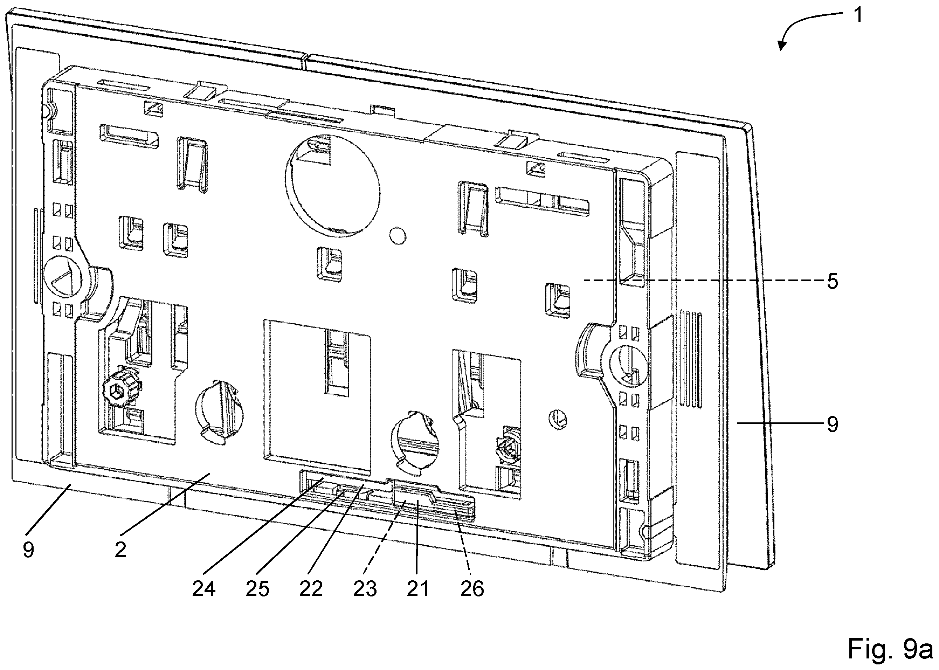

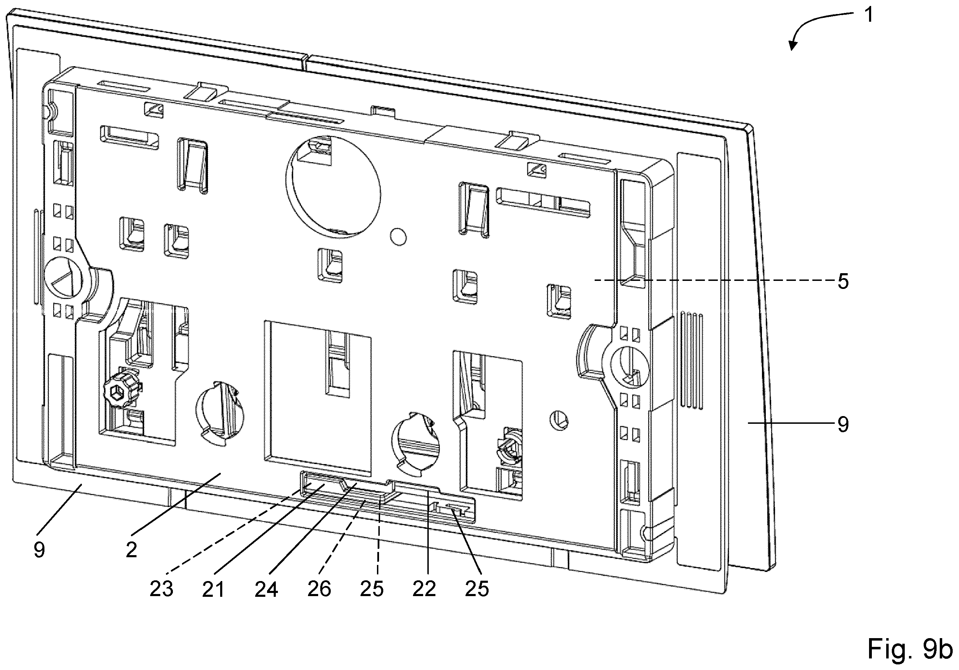

Anhand der Figuren 7 bis 9a/9b wird ein optionales Verriegelungselement genauer erläutert, welches der Verriegelung des Lagerelements 6 der Funktionseinheit 5 in der Lageraufnahme 4 dient. Am Lagerelement 6 der Funktionseinheit 5 ist ein Riegelelement 21 verschiebbar gelagert. Das Supportelement 2 weist eine Riegelaufnahme 22 auf. Das Riegelelement 21 ist von einer Freigabelage, in welcher das Riegelelement 21 nicht im Eingriff mit der Riegelaufnahme 22 steht, in eine Verriegelungslage, in welcher das Riegelelement 21 in festem Eingriff mit der Riegelaufnahme 22 steht, verschiebbar. Der feste Eingriff zwischen Riegelelement 21 und Riegelaufnahme 22 ist derart, dass eine Trennbewegung zwischen Lagerelement 6 und Supportelement 2 verunmöglicht wird. In der Figur 7 steht das Riegelelement 21 in der Freigabelage und in der Figur 8 steht das Riegelelement 21 in der Verriegelungslage.

Das Riegelelement 21 weist einen schlitzartigen Raum 23 auf und die Riegelaufnahme 22 wird durch einen Wandbereich 24 bereitgestellt. In der Verriegelungslage ragt der Wandbereich 24 in den schlitzartigen Raum 23 ein.

Das Riegelelement 21 ist in Einbaulage der Betätigungseinheit 1 gesehen, durch die mindestens eine Betätigungsplatte 9 überdeckt und somit nicht einsehbar.

Das Riegelelement 21 ist bezüglich der Lageraufnahme 4 gesehen gegenüber der Schwenklagerstellen 10 angeordnet. In Einbaulage gesehen liegt das Riegelelement 21 unterhalb der Schwenklagerstellen 10.

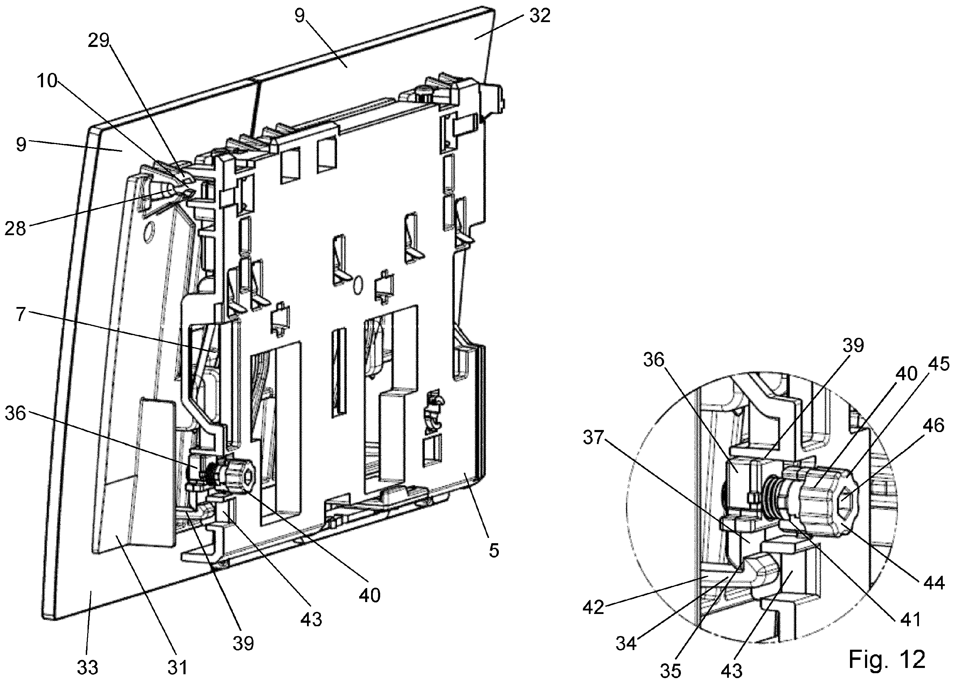

Vorzugsweise ist das Riegelelement 21 mit einem Abstand zur Rückseite 11 der Betätigungsplatte 9, insbesondere wenn diese in der Ausgangslage steht, angeordnet. Dies ist beispielsweise aus der Figur 12 oder aus den Seitenschnitten ersichtlich. Durch den Abstand ein Zwischenraum geschaffen wird, durch welchen das Riegelelement 21 von unten her ergreifbar wird.

Das Supportelement 2 weist eine Rastlasche 25 auf, über welche das Supportelement 2 in der Verriegelungslage in eine Rastausnehmung 26 am Riegelelement 21 eingreift.

Vorzugsweise wird das Riegelelement 21 von der Freigabelage in die Verriegelungslage entlang einer Längsbewegung bewegt. Das Riegelelement 21 und die Riegelaufnahme 22 stehen in der Verriegelungslage derart miteinander im Eingriff, dass eine Bewegung des Lagerelements 6 gegen die Federwirkung des gefedert ausgebildeten Lagerzapfens 17 verunmöglicht wird.

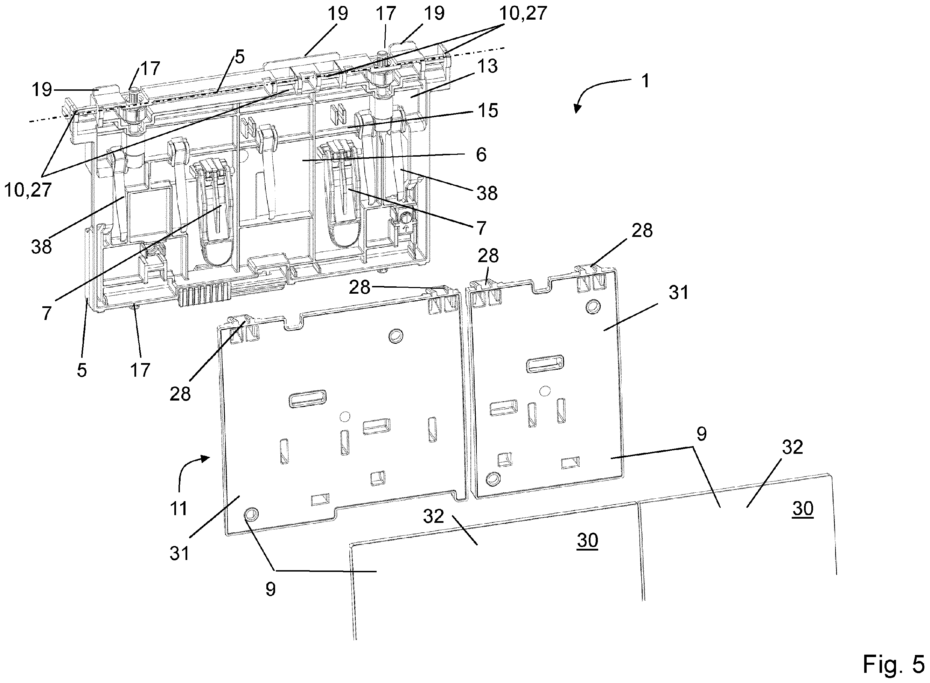

Von der Figur 5 und anderen Figuren wird die Struktur der Schwenklagerstellen 10 ersichtlich. Bevorzugt sind pro Betätigungsplatte 9 zwei beabstandet zueinander angeordnete Schwenklagerstellen 10 vorhanden. Jede der Schwenklagerstellen 10 wird durch eine Schwenklagerachse 27 und eine Schwenklageraufnahme 28 bereitgestellt. Die Schwenklagerachse 27 ist in der Schwenklageraufnahme 28 verschwenkbar gelagert.

Die Schwenklageraufnahme 28 weist weiter einen Durchbruch 29 auf, der derart ausgebildet ist, dass die Schwenklagerachse 27 über diesen Durchbruch 29 in die Schwenklageraufnahme 28 einsetzbar ist. In der gezeigten Ausführungsform weist die Schwenklagerachse 27 zwei abgeflachte Bereiche und zwei gerundete Bereiche auf. Die abgeflachten Bereiche weisen den Vorteil auf, dass die Montage der Betätigungsplatten 9 zur Funktionseinheit 5 einfacher wird.

In der gezeigten Ausführungsform ist die Schwenklagerachse 27 am Lagerelement 6 und die Schwenklageraufnahme 28 ist an der Betätigungsplatte 9 angeordnet.

Vorzugsweise ist die mindestens eine Schwenklagerstelle 10 bei einem oberen Rand des Lagerelements 6 angeordnet.

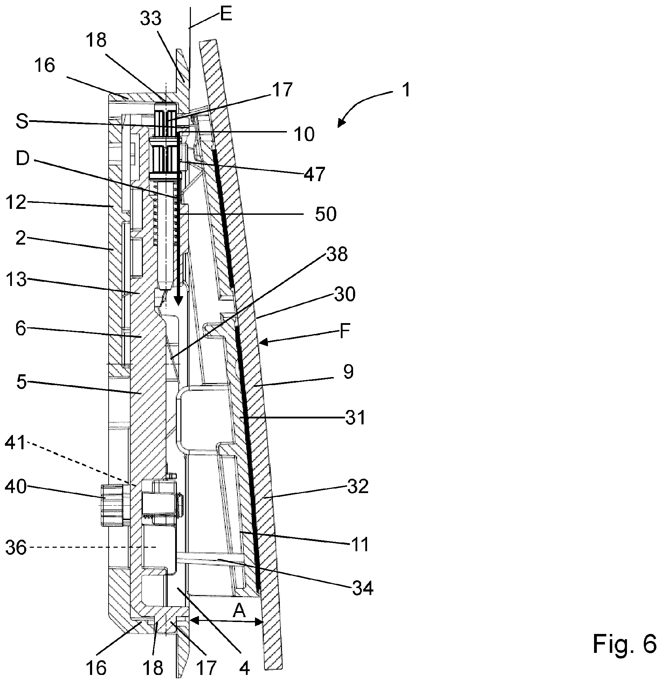

Wenn die Funktionseinheit 5 in die Lageraufnahme 4 eingesetzt ist, befindet sich die Schwenkachse S im Inneren der Lageraufnahme 4. Dies ist von den Schnittdarstellungen der Figuren 6, 10 und 11 ersichtlich.

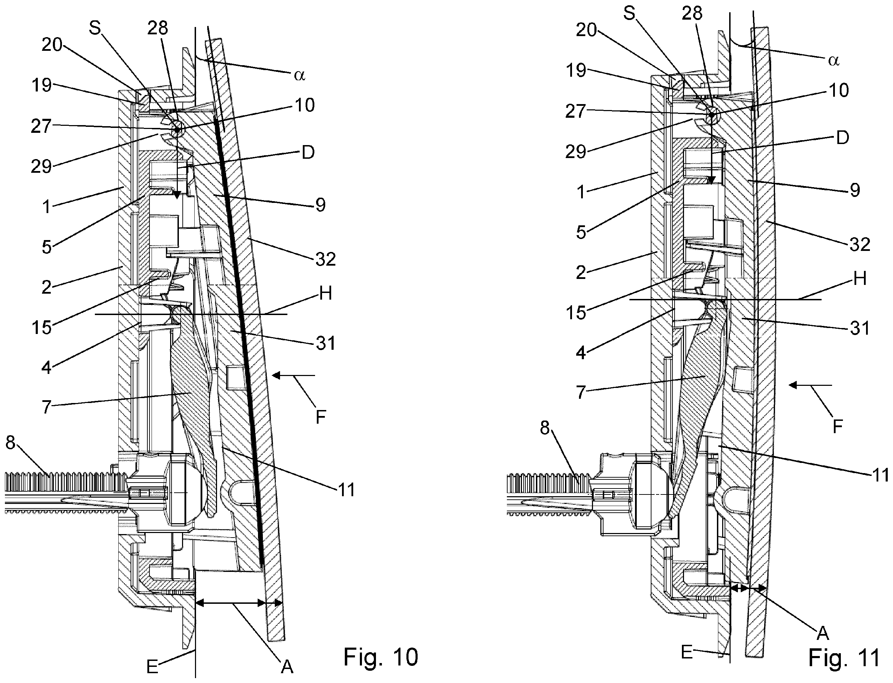

Anhand aller Figuren, insbesondere anhand der beiden Schnittdarstellungen gemäss den Figuren 10 und 11 wird in der Folge die bevorzugte Ausbildung der Betätigungsplatten erläutert.

In der gezeigten Ausführungsform weist die Frontseite 30 der mindestens einen Betätigungsplatte 9 eine Ausdehnung auf, welche derart ist, dass die Funktionseinheit 5 und das Supportelement 2 bei Blick in Richtung der Flächennormalen der Betätigungsplatte 9 auf die Betätigungsplatte 9 überdeckt sind. Die mindestens eine Betätigungsplatte 9 überdeckt demnach die Funktionseinheit 5 und das Supportelement 2. In der gezeigten Ausführungsform über die beiden Betätigungsplatten 9 die Funktionseinheit 5 und das Supportelement 2. Es sind demnach keine zusätzlichen Blenden oder zusätzliche Abdeckungen vorzusehen.

In der gezeigten Ausführungsform ist die mindestens eine Betätigungsplatte 9 zweiteilig ausgebildet und weist ein Trägerelement 31 und ein Dekorelement 32 auf. Das Dekorelement 32 ist auf dem Trägerelement 31 fest befestigt. Bei Blick in Richtung der Flächennormalen F des Dekorelements 32 überdeckt das Dekorelement 32 das Trägerelement vollständig. Hier weist das Dekorelement 32 eine Ausdehnung auf, welche derart ist, dass die Funktionseinheit 5 und das Supportelement 2 bei Blick in Richtung der Flächennormalen des Dekorelements 9 auf die Betätigungsplatte 9 überdeckt sind.

In anderen Ausführungsformen ist es auch denkbar, dass die mindestens eine Betätigungsplatte einstückig aufgebaut ist.

In der gezeigten Ausführungsform ist die Frontseite der Betätigungsplatte 9 bzw. des ggf. vorhandenen Dekorelements 32 mit einer Krümmung um eine Krümmungsachse gekrümmt ausgebildet. Es handelt sich dabei um eine konvexe Krümmung. Die Krümmungsachse verläuft vorzugsweise parallel zur Schwenkachse S. In einer anderen hier nicht gezeigten Ausführungsform weist ist die Frontseite der Betätigungsplatte 9 bzw. des ggf. vorhandenen Dekorelements 32 als ebene Fläche ausgebildet.

Das Supportelement 2 definiert mit einem Rand 33 bzw. hier auch mit dem Flansch 48 eine Ebene E. Die Schwenkachse S verläuft parallel zur besagten Ebene E. In der Ausgangslage liegt die Frontseite 30 der Betätigungsplatte 9 derart, dass ein in der Flächennormalen F auf die Ebene E gesehener Abstand A zwischen der Frontseite 30 und der Ebene E mit zunehmender Distanz D von der Schwenkachse S grösser wird. Der Abstand A ist demnach in der Nähe der Schwenkachse S kleiner als bei grösserer Entfernung zur Schenkachse S. Hierdruch wird erreicht, dass die Frontseite 30 in Einbaulage winklig geneigt zur Frontseite einer Vorwand zu liegen kommt.

Mit anderen Worten gesagt liegt die Frontseite 30 mit einem Winkel α winklig geneigt zur Ebene E. Der Winkel α zwischen der Frontseite 30 der Betätigungsplatte 9 und der Ebene E ist in der Ausgangslage zwischen 4° und 20°, insbesondere zwischen 5° und 12°.

Je nach Ausbildung der Frontseite 30 nimmt der Abstand A mit zunehmendem Abstand unterschiedlich zu. Bei der gekrümmt ausgebildeten Frontseite 30 nimmt der Abstand A mit zunehmender Distanz D von der Schwenkachse S gesehen variabel zu. Bei einer flachen Ausbildung der Frontseite 30 nimmt der Abstand A mit zunehmender Distanz D von der Schwenkachse S gesehen kontinuierlich zu.

Bei einer Betätigung der Betätigungsplatte 9 wird diese um die Schwenkachse S verschwenkt, wodurch der Abstand A kleiner wird.

In Einbaulage verläuft die Schwenkachse S in der Horizontalen. Der Abstand A ist an dem der Schwenkachse S gegenüberliegenden Ende der Betätigungsplatte 9 maximal. Das gegenüberliegende Ende ist vorzugsweise das untere Ende. Das heisst, der Benutzer nimmt bei Betrachtung der Betätigungsplatte 9 lediglich einen geringen Spalt zwischen Vorwand und Betätigungsplatte 9 oberhalb der Schwenkachse S war. Den durch den Abstand A grösseren Spalt nimmt der Benutzer nicht wahr, da dieser nur von unten her ersichtlich ist.

Bei der Betätigung der Betätigungsplatte 9 kommt die Rückseite 11 der Betätigungsplatte 9 über einen Kontaktpunkt mit dem Betätigungshebel 7 in Kontakt. Die Schwenkachse liegt bezüglich der Ebene E hinter der besagten Ebene E. Der Kontaktpunkt liegt dabei zu Beginn der Betätigung vor der besagten Ebene E liegt und verschiebt sich mit zunehmender Betätigung zur Ebene E hin. Je nach Ausbildung des Betätigungshebels 7 verschiebt sich der Kontaktpunkt hinter die besagte Ebene E. In der gezeigten Ausführungsform steht bei der Betätigung die Betätigungsplatte 9 über mehrere Kontaktpunkte mit dem Betätigungshebel 7 in Kontakt. Die Kontaktpunkte liegen unterhalb einer Horizontalebene H, welche parallel zur Schwenkachse S, rechtwinklig zur Ebene E und mittig durch die Betätigungsplatte 9 verläuft.

Anhand der Figur 12 wird in der Folge die Anschlagsstruktur, welche die Betätigungsplatte 9 bzw. die Betätigungsplatten 9 in der Ausgangslage hält, genauer erläutert. Die Betätigungsplatte 9 verfügt über einen betätigungsplattenseitigen Anschlag 34 mit einer entsprechenden Anschlagsfläche 35. Weiter verfügt die Funktionseinheit 5 über einen funktionseinheitsseitigen Anschlag 36 mit einer entsprechenden Anschlagsfläche 37. Die beiden genannten Anschläge 35, 37 schlagen aneinander an, wenn die Betätigungsplatte 9 in der Ausgangslage ist. Wenn, wie in den Figuren gezeigt, zwei Betätigungsplatten 9 vorhanden sind, weist vorzugsweise jede der Betätigungsplatten 9 je einen Anschlag auf.

Weiter weist die Betätigungseinheit 1 weiterhin mindestens ein Federelement 38 auf. Das Federelement 38 ist beispielsweise eine Blattfeder. Das Federelement 38 ist zwischen der Rückseite 11 der Betätigungsplatte 9 und dem Lagerelement 6 angeordnet. Das Federelement 38 drückt die Betätigungsplatte 9 vom Lagerelement 6 weg. Das Wegdrücken ist dabei derart, dass die beiden Anschlagsflächen 35, 37 miteinander in Kontakt bringbar sind und gegeneinander gedrückt werden.

Vorzugsweise ist der funktionseinheitsseitige Anschlag 36 relativ zum Lagerelement 6 einstellbar am Lagerelement 6 gelagert. Das heisst, dass die relative Lage der Anschlagsfläche 37 verschiebbar ist und die Lage der Anschlagsfläche 37 festlegbar ist. Der betätigungsplattenseitige Anschlag 34 ist als fester Anschlag ausgebildet.

In der gezeigten Ausführungsform ist der funktionseinheitsseitige Anschlag 36 in einer Anschlagsführung 39 im Lagerelement 6 einstellbar gelagert. Für die Einstellung des Anschlags 36 ist weiterhin eine Anschlagseinstellschraube 40 im Lagerelement 6 derart gelagert, dass der funktionseinheitsseitige Anschlag 36 bei Betätigung der Anschlagseinstellschraube 40 einstellbar ist.

Vorzugsweise steht die Anschlagsführung 39 von der Seite des Lagerelements 6, die der Betätigungsplatte 9 zugewandt ist, ab. Die Anschlagsführung 39 stellt eine Führung für den funktionseinheitsseitigen Anschlag 36 zur Betätigungsplatte 9 hin bereit.

Vorzugsweise ist die Anschlagseinstellschraube 40 in einer Aufnahme 41 im Lagerelement 6 drehbar und axial fest gelagert. Die Anschlagseinstellschraube 40 greift mit einem Gewinde in ein entsprechendes Gewinde am funktionseinheitsseitigen Anschlag 36 ein, wodurch der funktionseinheitsseitige Anschlag 36 bei Drehung der Anschlagseinstellschraube 40 verschoben wird.

Vorzugsweise ist der betätigungsplattenseitige Anschlag 34 Teil eines von der Rückseite 11 der Betätigungsplatte 9 abstehenden Hakens 42. Hier ist der Haken ein Teil des Trägerelements 31. Der Haken 42 ist derart ausgebildet, dass dieser bei einer Montagebewegung relativ zum funktionseinheitsseitigen Anschlag 36 ausgelenkt wird und diesen gewissermassen überschnappt. Der Haken 42 liegt im ausgelenkten Zustand derart, dass die beiden Anschlagsflächen 35, 37 seitlich zueinander liegen, derart, dass die beiden Anschlagsflächen 35, 37 relativ zueinander verschiebbar sind. Im nicht ausgelenkten Zustand liegt der Haken 42 derart, dass die beiden Anschlagsflächen 35, 37 so zueinander liegen, dass die beiden Anschlagsflächen 35, 37 miteinander für die Anschlagsfunktion in Kontakt bringbar sind.

Vorzugsweise weist das Lagerelement 6 eine Ausnehmung 43 auf, wobei der Haken 42 bei der Betätigungsbewegung der Betätigungsplatte von der Ausgangslage in die Betätigungslage in die Ausnehmung 43 bewegt wird.

**BEZUGSZEICHENLISTE**

| | | | |
|---|---|---|---|
| 1 | Betätigungseinheit | 33 | Rand |
| 2 | Supportelement | 34 | betätigungsplattenseitigen |
| 3 | Befestigungselement | | Anschlag |
| 4 | Lageraufnahme | 35 | Anschlagsfläche |
| 5 | Funktionseinheit | 36 | funktionseinheitsseitiger |
| 6 | Lagerelement | | Anschlag |
| 7 | Betätigungshebel | 37 | Anschlagsfläche |
| 8 | Drückerstange | 38 | Federelement |
| 9 | Betätigungsplatte | 39 | Anschlagsführung |
| 10 | Schwenklagerstelle | 40 | Anschlagseinstellschraube |
| 11 | Rückseite | 41 | Aufnahme |
| 12 | Bodenwand (Supportelement) | 42 | Haken |
| | | 43 | Ausnehmung |
| 13 | Bodenwand (Lagerelement) | 44 | Schraubenkopf |
| 15 | Verstärkungsrippen | 45 | Erhebungen |
| 16 | Seitenwände | 46 | Antriebsstruktur |
| 17 | Lagerzapfen | 47 | Betätigungsfläche |
| 18 | Lageröffnung | 48 | Flansch |
| 19 | Rippe | 49 | Öffnungen |
| 20 | Ausnehmung | 50 | Druckfeder |
| 21 | Riegelelement | 51 | Freischnitt |
| 22 | Riegelaufnahme | | |
| 23 | schlitzartiger Raum | A | Abstand |
| 24 | Wandbereich | D | Distanz |
| 25 | Rastlasche | E | Ebene |
| 26 | Rastausnehmung | F | Flächennormale |
| 27 | Schwenklagerachse | H | Horizontalebene |
| 28 | Schwenklageraufnahme | S | Schwenkachse |
| 29 | Durchbruch | | |
| 30 | Frontseite | | |
| 31 | Trägerelement | | |
| 32 | Dekorelement | | |

## Patentansprüche

1. Betätigungseinheit (1) für die Betätigung eines Spülventils in einem Spülkasten umfassend
ein Supportelement (2) mit mindestens einem Befestigungselement (3) zur Befestigung des Supportelements (2) und mit einer Lageraufnahme (4),
eine in die Lageraufnahme (4) einsetzbare Funktionseinheit (5) mit einem Lagerelement (6) und mit mindestens einem am Lagerelement (6) gelagerten Betätigungshebel (7) zur Betätigung von einer auf das Spülventil wirkenden Drückerstange (8)
und mindestens eine Betätigungsplatte (9),
wobei die mindestens eine Betätigungsplatte (9) über mindestens eine Schwenklagerstelle (10) an der Funktionseinheit (5) um eine Schwenkachse (S) von einer Ausgangslage in eine Spüllage verschwenkbar gelagert ist, und
wobei die mindestens eine Betätigungsplatte (9) mit ihrer Rückseite (11) auf den mindestens einen Betätigungshebel (7) wirkt und diesen bei der Bewegung von der Ausgangslage in die Spüllage in Richtung Supportelement (2) verschwenkt, derart, dass die Drückerstange (8) betätigbar ist, **dadurch gekennzeichnet,**
**dass** am Lagerelement (6) der Funktionseinheit (5) ein Riegelelement (21) verschiebbar gelagert ist und dass das Supportelement (2) eine Riegelaufnahme (22) aufweist, wobei das Riegelelement (21) von einer Freigabelage, in welcher das Riegelelement (21) nicht im Eingriff mit der Riegelaufnahme (22) steht, in eine Verriegelungslage, in welcher das Riegelelement (21) in festem Eingriff mit der Riegelaufnahme (22) steht, verschiebbar ist, wobei der feste Eingriff zwischen Riegelelement (21) und Riegelaufnahme (22) derart ist, dass eine Trennbewegung zwischen Lagerelement (6) und Supportelement (2) verunmöglicht wird.

2. Betätigungseinheit (1) nach Anspruch 1, **dadurch gekennzeichnet, dass** das Riegelelement (21) einen schlitzartigen Raum (23) aufweist und die Riegelaufnahme (22) durch einen Wandbereich (24) bereitgestellt wird, wobei in der Verriegelungslage der Wandbereich (24) in den schlitzartigen Raum (23) hineinragt.

3. Betätigungseinheit (1) nach Anspruch 1 oder 2, **dadurch gekennzeichnet, dass** das Riegelelement (21) in Einbaulage der Betätigungseinheit (1) gesehen, durch die mindestens eine Betätigungsplatte (9) überdeckt ist und somit nicht einsehbar ist.

4. Betätigungseinheit (1) nach einem der vorhergehenden Ansprüche 1 bis 3, **dadurch gekennzeichnet, dass** das Riegelelement (21) bezüglich der Lageraufnahme (4) gesehen gegenüber der Schwenklagerstellen (10) angeordnet ist.

5. Betätigungseinheit (1) nach einem der vorhergehenden Ansprüche 1 bis 4, **dadurch gekennzeichnet, dass** das Riegelelement (21) mit einem Abstand zur Rückseite (11) der Betätigungsplatte (9), insbesondere wenn diese in der Ausgangslage steht, angeordnet ist, wobei durch den Abstand ein Zwischenraum geschaffen wird, durch welchen das Riegelelement (21) ergreifbar wird.

6. Betätigungseinheit (1) nach einem der vorhergehenden Ansprüche 1 bis 5, **dadurch gekennzeichnet, dass** das Riegelelement (21) über eine Rastlasche (25) verfügt, über welche das Riegelelement (21) in der Verriegelungslage und/oder in der Freigabelage in eine Rastausnehmung (26) am Supportelement (2) eingreift; und/oder dass das Supportelement (2) über eine Rastlasche (25) verfügt, über welche das Riegelelement (21) in der Verriegelungslage und/oder in der Freigabelage in eine Rastausnehmung (26) am Riegelelement (21) eingreift.

7. Betätigungseinheit (1) nach einem der vorhergehenden Ansprüche 1 bis 6, **dadurch gekennzeichnet, dass** das Riegelelement (21) von der Freigabelage in die Verriegelungslage entlang einer Längsbewegung bewegt wird.

8. Betätigungseinheit (1) nach einem der vorhergehenden Ansprüche, **dadurch gekennzeichnet, dass** die Funktionseinheit (5) und das Supportelement (2) über Rastelemente mechanisch miteinander verrastet sind, wobei die Rastelemente durch Lagerzapfen (17) und Lageröffnungen (18) bereitgestellt werden,
wobei das Supportelement (2) mindestens zwei einander gegenüberliegende Lageröffnungen (18) aufweist und dass die Funktionseinheit (5) einen festen Lagerzapfen (17) und einen gefedert ausgebildeten Lagerzapfen (17) aufweist, wobei zur festen Lagerung der Funktionseinheit (5) in der Lageraufnahme (4) die Lagerzapfen (17) in die Lageröffnungen (18) eingreifen;
oder
wobei die Funktionseinheit (5) mindestens zwei einander gegenüberliegende Lageröffnungen (18) aufweist und dass das Supportelement (2) einen festen Lagerzapfen (17) und einen gefedert ausgebildeten Lagerzapfen (17) aufweist, wobei zur festen Lagerung der Funktionseinheit (5) in der Lageraufnahme (4) die Lagerzapfen in die Lageröffnungen (18) eingreifen.

9. Betätigungseinheit (1) nach Anspruch 8, **dadurch gekennzeichnet, dass** das Riegelelement (21) und die Riegelaufnahme (22) in der Verriegelungslage derart miteinander im Eingriff stehen, dass eine Bewegung des Lagerelements (6) gegen die Federwirkung des gefedert ausgebildeten Lagerzapfens (17) verunmöglicht wird.

## Claims

1. Actuating unit (1) for actuating a flush valve in a cistern, comprising
a support element (2) with at least one fastening element (3) for fastening the support element (2) and with a bearing receptacle (4),
a functional unit (5) insertable into the bearing receptacle (4) with a bearing element (6) and with at least one actuating lever (7) mounted on the bearing element (6) for actuating a push rod (8) acting on the flush valve (8),
and at least one actuating plate (9),
wherein the at least one actuating plate (9) is mounted on the functional unit (5) via at least one pivot bearing point (10) so that it can pivot about a pivot axis (S) from an initial position into a flush position, and
wherein the at least one actuating plate (9) acts with its rear side (11) on the at least one actuating lever (7) and pivots it in the direction of the support element (2) during movement from the initial position to the flush position, such that the push rod (8) can be actuated, **characterized in that**
a locking element (21) is mounted on the bearing element (6) of the functional unit (5) in a displaceable manner and that the support element (2) comprises a locking receptacle (22), wherein the locking element (21) can be moved from a release position, in which the locking element (21) is not engaged with the latch receptacle (22), into a locking position in which the latch element (21) is firmly engaged with the latch receptacle (22), the firm engagement between the latch element (21) and the latch receptacle (22) being such that a separating movement between the bearing element (6) and support element (2) is prevented.

2. Actuating unit (1) according to claim 1, **characterized in that** the locking element (21) comprises a slot-like space (23) and the locking receptacle (22) is provided by a wall area (24), wherein in the locking position the wall area (24) protrudes into the slot-like space (23).

3. Actuating unit (1) according to claim 1 or 2, **characterized in that**, when viewed in the installed position of the actuating unit (1), the locking element (21) is covered by the at least one actuating plate (9) and is therefore not visible.

4. Actuating unit (1) according to any one of the preceding claims 1 to 3, **characterized in that** the locking element (21) is arranged opposite the pivot bearing points (10) as seen in relation to the bearing receptacle (4).

5. Actuating unit (1) according to any one of the preceding claims 1 to 4, **characterized in that** the locking element (21) is arranged at a distance from the rear side (11) of the actuating plate (9), in particular when the latter is in its initial position, wherein the distance creates an intermediate space through which the locking element (21) can be gripped.

6. Actuating unit (1) according to any one of the preceding claims 1 to 5, **characterized in that** the locking element (21) comprises a latching tab (25) via which the locking element (21) engages in a latching recess (26) on the support element (2) in the locking position and/or in the release position; and/or that the support element (2) comprises a locking tab (25) via which the locking element (21) engages in a locking recess (26) on the locking element (21) in the locking position and/or in the release position.

7. Actuating unit (1) according to one of the preceding claims 1 to 6, **characterized in that** the locking element (21) is moved from the release position to the locking position along a longitudinal movement.

8. Actuating unit (1) according to one of the preceding claims, **characterized in that** the functional unit (5) and the support element (2) are mechanically locked together via latching elements, wherein the latching elements are provided by bearing pins (17) and bearing openings (18),
wherein the support element (2) comprises at least two bearing openings (18) located opposite each other, and that the functional unit (5) comprises a fixed bearing pin (17) and a spring-loaded bearing pin (17), wherein the bearing pins (17) engage in the bearing openings (18) to firmly support the functional unit (5) in the bearing receptacle (4);
or
wherein the functional unit (5) comprises at least two bearing openings (18) located opposite each other and that the support element (2) comprises a fixed bearing pin (17) and a spring-loaded bearing pin (17), wherein, for the fixed mounting of the functional unit (5) in the bearing receptacle (4), the bearing pins engage in the bearing openings (18).

9. Actuating unit (1) according to claim 8, **characterized in that** the locking element (21) and the locking receptacle (22) engage with each other in the locking position in such a way that movement of the bearing element (6) against the spring action of the spring-loaded bearing pin (17) is prevented.

## Revendications

1. Unité d'actionnement (1) pour l'actionnement d'une vanne de rinçage dans un réservoir de chasse d'eau, comprenant
un élément de support (2) avec au moins un élément de fixation (3) pour la fixation de l'élément de support (2) et avec un logement d'appui (4),
une unité fonctionnelle (5) pouvant être insérée dans le logement d'appui (4) avec un élément d'appui (6) et avec au moins un levier d'actionnement (7) monté sur l'élément d'appui (6) pour actionner une tige de pression (8) agissant sur la vanne de rinçage
et au moins une plaque d'actionnement (9),
l'au moins une plaque d'actionnement (9) étant montée sur l'unité fonctionnelle (5) par l'intermédiaire d'au moins un point d'appui pivotant (10) de manière à pouvoir pivoter autour d'un axe de pivotement (S) d'une position initiale à une position de rinçage, et
l'au moins une plaque d'actionnement (9) agissant avec sa face arrière (11) sur l'au moins un levier d'actionnement (7) et le faisant pivoter lors du mouvement de la position initiale vers la position de rinçage en direction de l'élément de support (2), de telle sorte que la tige de pression (8) puisse être actionnée, **caractérisé en ce**
**qu'**un élément de verrouillage (21) est monté de manière déplaçable sur l'élément d'appui (6) de l'unité fonctionnelle (5) et que l'élément de support (2) comporte un logement de verrouillage (22), l'élément de verrouillage (21) pouvant être déplacé d'une position de déverrouillage, dans laquelle l'élément de verrouillage (21) n'est pas en prise avec le logement de verrouillage (22), à une position de verrouillage dans laquelle l'élément de verrouillage (21) est en prise fixe avec le logement de verrouillage (22), la prise fixe entre l'élément de verrouillage (21) et le logement de verrouillage (22) étant telle qu'un mouvement de séparation entre l'élément d'appui (6) et l'élément de support (2) est rendu impossible.

2. Unité d'actionnement (1) selon la revendication 1, **caractérisée en ce que** l'élément de verrouillage (21) présente un espace en forme de fente (23) et le logement de verrouillage (22) est formé par une zone de paroi (24), la zone de paroi (24) s'engageant dans l'espace en forme de fente (23) dans la position de verrouillage.

3. Unité d'actionnement (1) selon la revendication 1 ou 2, **caractérisée en ce que**, vu en position de montage de l'unité d'actionnement (1), l'élément de verrouillage (21) est recouvert par l'au moins une plaque d'actionnement (9) et n'est donc pas visible.

4. Unité d'actionnement (1) selon l'une des revendications 1 à 3 précédentes, **caractérisée en ce que** l'élément de verrouillage (21) est disposé, par rapport au logement d'appui (4), en face des points d'appui pivotants (10).

5. Unité d'actionnement (1) selon l'une des revendications 1 à 4 précédentes, **caractérisée en ce que** l'élément de verrouillage (21) est disposé à une certaine distance de la face arrière (11) de la plaque d'actionnement (9), en particulier lorsque celle-ci se trouve dans la position initiale, cette distance créant un espace intermédiaire à travers lequel l'élément de verrouillage (21) peut être saisi.

6. Unité d'actionnement (1) selon l'une des revendications 1 à 5 précédentes, **caractérisée en ce que** l'élément de verrouillage (21) dispose d'une languette d'encliquetage (25) par laquelle l'élément de verrouillage (21) s'engage dans la position de verrouillage et/ou dans la position de déverrouillage dans un évidement d'encliquetage (26) sur l'élément de support (2) ; et/ou **en ce que** l'élément de support (2) dispose d'une languette d'encliquetage (25) par l'intermédiaire de laquelle l'élément de verrouillage (21) s'engage dans la position de verrouillage et/ou dans la position de déverrouillage dans un évidement d'encliquetage (26) sur l'élément de verrouillage (21).

7. Unité d'actionnement (1) selon l'une des revendications 1 à 6 précédentes, **caractérisée en ce que** l'élément de verrouillage (21) est déplacé de la position de déverrouillage à la position de verrouillage selon un mouvement longitudinal.

8. Unité d'actionnement (1) selon l'une quelconque des revendications précédentes, **caractérisée en ce que** l'unité fonctionnelle (5) et l'élément de support (2) sont encliquetés mécaniquement l'un avec l'autre par des éléments d'encliquetage, les éléments d'encliquetage étant fournis par des tourillons (17) et des ouvertures d'appui (18),
l'élément de support (2) présentant au moins deux ouvertures d'appui (18) opposées l'une à l'autre et l'unité fonctionnelle (5) présentant un tourillon fixe (17) et un tourillon à ressort (17), les tourillons (17) s'engageant dans les ouvertures d'appui (18) pour assurer le montage fixe de l'unité fonctionnelle (5) dans le logement d'appui (4);
ou
l'unité fonctionnelle (5) présentant au moins deux ouvertures d'appui (18) opposées l'une à l'autre et l'élément de support (2) présentant un tourillon fixe (17) et un tourillon à ressort (17), les tourillons s'engageant dans les ouvertures d'appui (18) pour assurer le montage fixe de l'unité fonctionnelle (5) dans le logement d'appui (4).

9. Unité d'actionnement (1) selon la revendication 8, **caractérisée en ce que** l'élément de verrouillage (21) et le logement de verrouillage (22) s'engagent l'un dans l'autre dans la position de verrouillage de telle sorte qu'un mouvement de l'élément d'appui (6) contre l'action élastique du tourillon à ressort (17) est rendu impossible.
